(19) Europäisches Patentamt / European Patent Office / Office européen des brevets

(11) **EP 4 621 650 A1**

(12) **EUROPEAN PATENT APPLICATION**

(43) Date of publication:
   **24.09.2025   Bulletin 2025/39**

(21) Application number: **25158779.6**

(22) Date of filing: **19.02.2025**

(51) International Patent Classification (IPC):
   **G06N 3/0455** *(2023.01)*      **G06N 3/088** *(2023.01)*
   **G06N 10/60** *(2022.01)*

(52) Cooperative Patent Classification (CPC):
   **G06N 3/0455; G06N 3/088; G06N 10/60**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority: **22.03.2024   JP 2024047183**

(71) Applicant: **Fujitsu Limited
   Kawasaki-shi, Kanagawa 211-8588 (JP)**

(72) Inventor: **TRAN, Quoc Hoan
   Kawasaki-shi, 211-8588 (JP)**

(74) Representative: **Haseltine Lake Kempner LLP
   Cheapside House
   138 Cheapside
   London EC2V 6BJ (GB)**

(54) **MACHINE LEARNING PROGRAM, MACHINE LEARNING METHOD, AND INFORMATION PROCESSING DEVICE**

(57)   A machine learning program including instructions which, when executed by a computer, cause the computer to execute processing including: executing first machine learning on a quantum autoencoder by using first input data and second input data in which states of the respective qubits are mutually the same; and executing second machine learning on the quantum autoencoder trained by the first machine learning by using third input data and fourth input data in which states of the respective qubits are mutually different.

FIG. 1

EP 4 621 650 A1

**Description**

FIELD

The embodiments discussed herein are related to a machine learning program, a machine learning method, and an information processing device.

BACKGROUND

A quantum circuit obtained by combining quantum gates that execute an operation on one or a plurality of qubits is used. The quantum circuit is generated by combining a gate that changes a state of one qubit, a gate that creates an entanglement between two qubits, and the like, and classical information is extracted from the quantum circuit using a process referred to as measurement. Examples of such a quantum circuit include a fixed quantum circuit having no parameter and a parameterized variational quantum circuit.

Furthermore, a machine learning model based on a quantum circuit, in which a principle of quantum calculation is applied to machine learning, is used for a region in which calculation by a classical computer that is a common computer currently in widespread use is difficult. For example, as the machine learning model based on a quantum circuit, there is a quantum autoencoder in which an autoencoder that is one of architectures widely used in a region of deep learning or a neural network is implemented by a quantum circuit. The quantum autoencoder is an idea of the autoencoder adapted to quantum computing, and implements a process for encoding and decoding data in a qubit, thereby implementing feature extraction and compression of data having a quantum characteristic.

In recent years, in order to remove noise of a variational quantum algorithm (VQA), an Ansatz quantum circuit that mounts a quantum autoencoder is used as a quantum machine learning (QML) method.

Examples of the related art includes: Japanese Laid-open Patent Publication No. 2022-176899; Japanese Laid-open Patent Publication No. 2021-193615; U.S. Patent Application Publication No. 2020/0169396; and U.S. Patent Application Publication No. 2019/0164034.

SUMMARY

TECHNICAL PROBLEM

However, for example, it is difficult to search for a local solution or a solution in machine learning of noise removal of the variational quantum algorithm, and a training time of the quantum autoencoder is prolonged and accuracy degradation of the machine-learned quantum autoencoder occurs. For example, in the machine learning of the quantum autoencoder described above, when a problem size increases, it takes time to optimize many variational parameters, and it is difficult to obtain high accuracy in designing a structure of a quantum circuit or initializing the parameters.

In one aspect, an object is to provide a machine learning program, a machine learning method, and an information processing device capable of generating a highly accurate quantum autoencoder by short-time machine learning.

SOLUTION TO PROBLEM

According to an aspect of the embodiments, there is provided a non-transitory computer-readable recording medium storing a machine learning program for causing a computer to execute processing including: executing first machine learning on a quantum autoencoder by using first input data and second input data in which states of the respective qubits are mutually the same; and executing second machine learning on the quantum autoencoder trained by the first machine learning by using third input data and fourth input data in which states of the respective qubits are mutually different.

ADVANTAGEOUS EFFECTS OF INVENTION

According to an embodiment, a highly accurate quantum autoencoder may be generated by short-time machine learning.

BRIEF DESCRIPTION OF DRAWINGS

FIG. 1 is a diagram for describing machine learning of a quantum circuit;

FIGs. 2A and 2B are diagrams for describing a variational quantum algorithm;

FIGs. 3A and 3B are diagrams for describing a quantum circuit of a quantum autoencoder;

FIG. 4 is a diagram for describing machine learning of the quantum autoencoder that performs noise removal;

FIG. 5 is a diagram for describing machine learning of the quantum autoencoder that performs noise removal for a variational quantum eigensolver (VQE);

FIG. 6 is a diagram for describing machine learning of a quantum autoencoder according to an information processing device according to a first embodiment;

FIG. 7 is a functional block diagram illustrating a functional configuration of the information processing device according to the first embodiment;

FIG. 8 is a diagram for describing generation of training data for subtask training;

FIG. 9 is a diagram for describing the subtask training of the quantum autoencoder (QAE);

FIG. 10 is a diagram for describing generation of training data for main task training;

FIG. 11 is a diagram for describing the main task training of the QAE;

FIG. 12 is a diagram for describing noise removal using the QAE after training;

FIG. 13 is a flowchart illustrating a flow of training processing of the QAE;

FIG. 14 is a diagram for describing an effect of the subtask training;

FIG. 15 is a diagram for describing training with a stepwise effect;

FIG. 16 is a diagram for describing determination of a QAE circuit; and

FIG. 17 is a diagram for describing a hardware configuration example.

DESCRIPTION OF EMBODIMENTS

Hereinafter, embodiments of a machine learning program, a machine learning method, and an information processing device disclosed in the present application will be described in detail with reference to the drawings. Note that the present disclosure is not limited by the embodiments.

[First Embodiment]

<Introduction>

In the present embodiment, regarding machine learning of a quantum autoencoder (QAE) in which an encoder and a decoder capable of removing quantum noise are constructed by variational quantum circuits, an example of generating a highly accurate QAE (hereinafter, it may be referred to as a QAE circuit) by short-time training will be described. Note that a quantum autoencoder that executes noise removal may be referred to as a noise removal QAE.

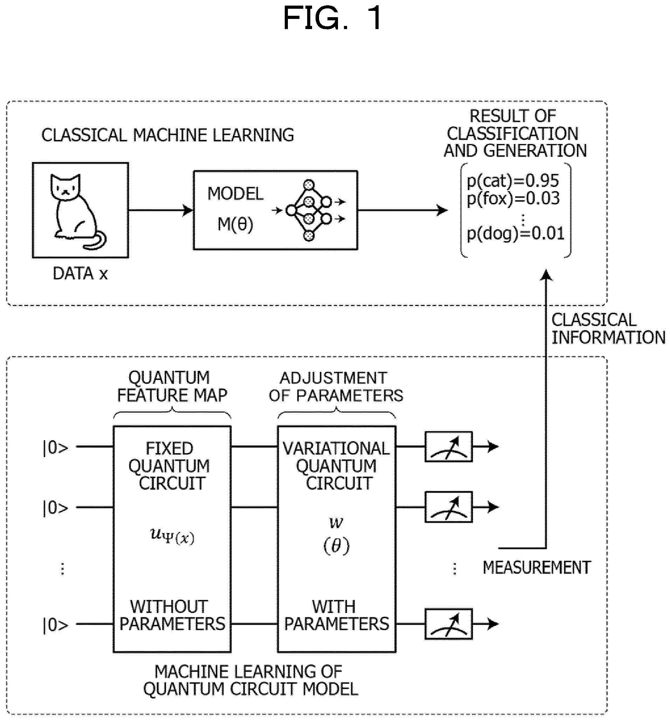

First, before describing the noise removal QAE, a quantum circuit, a variational quantum algorithm, and a common QAE will be described as information related to the noise removal QAE. FIG. 1 is a diagram for describing machine learning of a quantum circuit. As illustrated in FIG. 1, quantum machine learning is obtained by applying a principle of quantum calculation to machine learning (pattern identification or generation). For example, a quantum feature map performed by a fixed quantum circuit in which information regarding data is embedded is created. Subsequently, a variational quantum circuit acts on an output of the quantum feature map. Thereafter, information obtained by measurement is used for training, and classification and generation of data may be executed by adjusting parameters of the variational quantum circuit.

(Description of Variational Quantum Circuit)

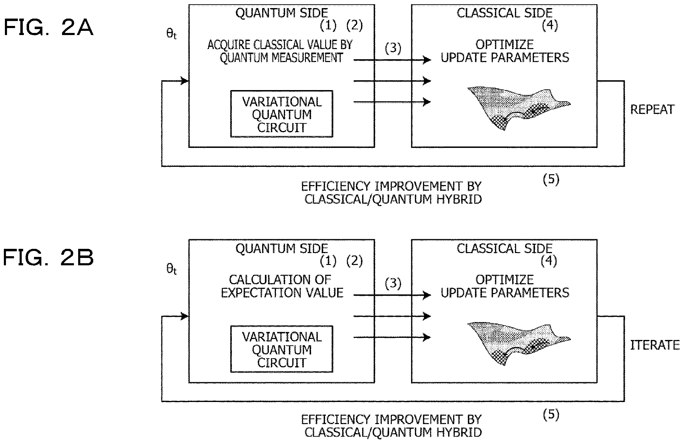

Next, the variational quantum circuit used for the generation of the quantum feature map will be described. The variational quantum circuit is a quantum circuit constructed using the variational quantum algorithm. FIGs. 2A and 2B are diagrams for describing the variational quantum algorithm. FIG. 2A illustrates the variational quantum algorithm (VQA) that is one of algorithms using a quantum computer and a classical computer in a hybrid manner. The VQA has attracted attention as a method of using a current noisy intermediate-scale quantum (NISQ) computer for a problem that is difficult to solve by the classical computer alone.

Here, components of the VQA will be described. As illustrated in FIG. 2A, first, after preparation of a quantum state is performed (see (1) of FIG. 2A), specific quantum calculation is executed based on the parameter-dependent quantum state described above (see (2) of FIG. 2A). Specifically, a quantum state depending on parameters is prepared in the quantum computer. This state is obtained by an operation of the quantum circuit (variational quantum circuit) depending on the parameters given from the outside.

Next, quantum measurement is performed (see (3) of FIG. 2A), classical optimization is executed (see (4) of FIG.

2A), and then processing based on an interaction between the classical and the quantum is executed (see (5) of FIG. 2A). Specifically, the quantum state after the specific quantum calculation is measured to acquire a classical value. Next, results of the quantum calculation and measurement described above are evaluated by the classical computer, and new parameters for searching for a minimum value of a target function (for example, an energy function or the like) are proposed.

Such a VQA needs the repetitive interaction between the classical computer and the quantum computer. Using the new parameters, the calculation and the measurement are performed again from the preparation of the quantum state, and this is iterated. This process is repeated until the minimum value of the target function is found by a classical optimization algorithm.

Next, a variational quantum eigensolver (VQE) that is one of variational quantum algorithms for efficiently solving an eigenvalue problem using a quantum computer will be described. The VQE (hereinafter, it may be referred to as a VQE circuit) is particularly suitable for obtaining the smallest eigenvalue of a large Hamiltonian matrix (which usually corresponds to energy of a ground state). The VQE is very useful in quantum chemical calculation and simulation of a part of physical systems. An advantage of the VQE is that it is possible to effectively perform calculation in a shallow quantum circuit in depth, and because of this advantage, the VQE is expected to be used for a practical task even in a current NISQ device.

Here, components of the VQE will be described. As illustrated in FIG. 2B, first, after setting based on a principle of a variational method is performed (see (1) of FIG. 2B), a quantum circuit (Ansatz) with parameters is set (see (2) of FIG. 2B). Specifically, a classical variational method is a method of adjusting parameters of a trial function (Ansatz) to minimize expected energy, and in the VQE, this idea is applied to a quantum system. Additionally, in the VQE, a parameterized quantum circuit (variational quantum circuit) is used as a portion corresponding to the trial function of the variational method. A quantum state is changed by adjusting parameters of this circuit.

Next, specific quantum calculation is executed (see (3) of FIG. 2B), quantum measurement is performed (see (4) of FIG. 2B), classical optimization is executed (see (5) of FIG. 2B), and then processing based on an interaction between the classical and the quantum is executed (see (6) of FIG. 2A). Specifically, the specific quantum calculation is executed based on the parameter-dependent quantum state described above, and the quantum state after the calculation is measured to acquire an expectation value (energy value) of the state with respect to a Hamiltonian. Then, after the energy value is calculated by the quantum computer, this value is fed back to the optimization algorithm (for example, a gradient descent method or the like) in the classical computer, and the parameters of the Ansatz circuit are updated.

Such a VQE needs the repetitive interaction between the classical computer and the quantum computer. The quantum computer is used to calculate the expectation value, and the classical computer is optimized by using obtained data.

(Quantum Autoencoder)

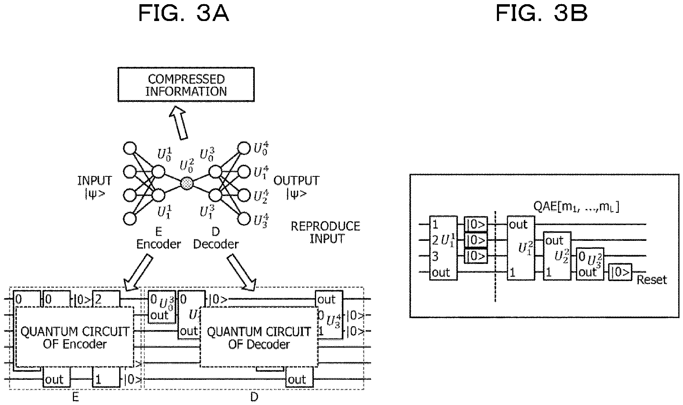

Next, a quantum autoencoder (QAE) that executes noise removal on data generated by the VQE or the like will be described. First, a common QAE will be described. FIGs. 3A and 3B are diagrams for describing a quantum circuit of the quantum autoencoder.

As illustrated in FIG. 3A, the quantum autoencoder is obtained by adapting, to quantum computing, an idea of an autoencoder that encodes input data into a low-dimensional feature space by a mechanism referred to as an encoder and then performs reconstruction to original data by a decoder, and implements each process for encoding and decoding data in qubits. Therefore, feature extraction and compression of data having quantum characteristics are executed.

Next, the quantum circuit of the QAE will be described. As illustrated in FIG. 3B, the QAE is constructed by a dissipative quantum neural network. Each neuron corresponds to a qubit, and a unitary circuit couples neurons of a subsequent coupling layer. Since qubits of each layer dissipate after a forward process of the next layer, it is possible to constitute the minimum space for the QAE.

For example, a QAE having a structure of $(m_1,..., m_M)$ $(M \geq 2)$ will be described as an example (usually $m_M = m_1$). Assuming that a unitary acting on a j-th neuron in a (i + 1)-th layer and a neuron in a previous layer coupled to the neuron is $U_j^i$, a unitary between an i-th layer and the (i + 1)-th layer is expressed by Expression (1).

[Expression 1]

$$U^i = \prod_j U_j^i \qquad \cdots (1)$$

When execution of $U_j^i$ ends, an $m_i$ qubit is reset and reused. Assuming that a quantum state having an $m_i$ neuron in the i-th layer is $\beta_i$, a quantum channel between $\beta_i$ and $\beta_{i+1}$ is expressed by Expression (2). $Q_i$ extends the $m_i$ qubit to an $(m_i + m_{i+1})$ qubit state, and then traces out qubits in the i-th layer to reduce the $(m_i + m_{i+1})$ qubit state to an $m_{i+1}$ qubit state. Since

($Q = Q_{M-1} ... Q_1$) is applied to $\beta_1$, an output state $\beta_{out}$ of the QAE becomes "$\beta_{out} = Q (\beta_1) = Q_{M-1} ... Q_1 (\beta_1)$".

[Expression 2]

$$\beta_{i+1} = Q_i(\beta_i) = Tr_i[U^{i^\dagger}(\beta_i \otimes |0\rangle\langle 0|^{\otimes m_{i+1}})U^i] \qquad \cdots (2)$$

(Noise Removal QAE)

Next, a QAE that executes noise removal will be described. A noise removal QAE is a quantum circuit that separates noise by compression by an encoder to generate compressed information without noise and converts the compressed information into a target state by a decoder. The unitary "$U_j^i$" acting on the j-th neuron in the (i + 1)-th layer and the neuron in the previous layer coupled to the neuron is constructed as follows. For example, a circuit block of "a rotation gate of each qubit and a two-qubit gate for generating an entanglement" is applied L times, and finally, the rotation gate of each qubit is applied. The rotation gate is selected from $R_x$, $R_Y$, and $R_Z$ gates, a two-qubit gate $V_i^j$ (acting on i-th and j-th qubits) is selected from CX, CY, CZ, CRX, CRY, CRZ, RXX, RYY, and RZZ gates, and arrangement of the two-qubit gate is determined by selecting a pair (i, j).

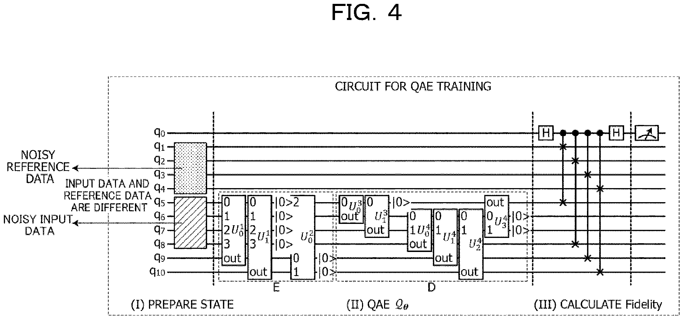

In machine learning of such a noise removal QAE, basically training is performed by a process similar to that of an autoencoder of a classical computer. FIG. 4 is a diagram for describing the machine learning of the quantum autoencoder that performs noise removal. The machine learning of the noise removal QAE illustrated in FIG. 4 aims to derive a true state "$|\psi\rangle$" from a noisy quantum state "$|\psi_1\rangle$, $|\psi_2\rangle$".

In order to calculate a training cost function, the following training circuits are constituted. Specifically, (I) a circuit that prepares input data and reference data of a QAE circuit, (II) a QAE circuit $Q_\theta$ having a parameter $\theta$, and (III) a circuit that calculates Fidelity (closeness) between an output of the QAE and a reference state, and in a case where it is assumed that a probability that a measurement qubit may obtain a measurement result 0 is $p_0$, Fidelity = $2p_0 - 1$ holds.

That is, a quantum circuit for machine learning of the noise removal QAE (hereinafter, it may be referred to as a "quantum circuit for machine learning") has qubits $q_0$ to $q_{10}$, and a first circuit configuration having a gate (Hadamard gate) from which a superposed state is output for the qubit $q_0$ and a circuit that does not execute a gate operation on the input data for the qubits $q_1$ to $q_4$ is set, and a second circuit configuration (QAE circuit) that executes a gate operation on the input data for the qubits $q_5$ to $q_{10}$ is set.

In such a circuit, training is performed so that Fidelity between an output "$Q_\theta (|\psi_1\rangle)$" and noisy data "$|\psi_2\rangle$" when noisy data "$|\psi_1\rangle$" is input to the QAE circuit $Q_\theta$ having the parameter $\theta$ for N pairs ($i_1, i_2$) becomes high. That is, the training is performed so as to maximize a training cost indicated in Expression (3).

[Expression 3]

$$\frac{1}{N}\sum_{i,j}\langle\psi_{i_2}|Q_\theta(\psi_{i_1})|\psi_{i_2}\rangle \qquad \cdots (3)$$

(Noise Removal QAE for VQE)

The removal QAE described above is trained particularly for a VQE, and is used for noise removal of data generated by the VQE. In a VQE algorithm, noise in a quantum device and a stochastic property of an optimization method greatly affect trainability of the VQE and accuracy of a final result. As a result, the VQE generates a quantum state including noise as an output. Therefore, noise removal using the noise removal QAE is executed on the data output from the VQE.

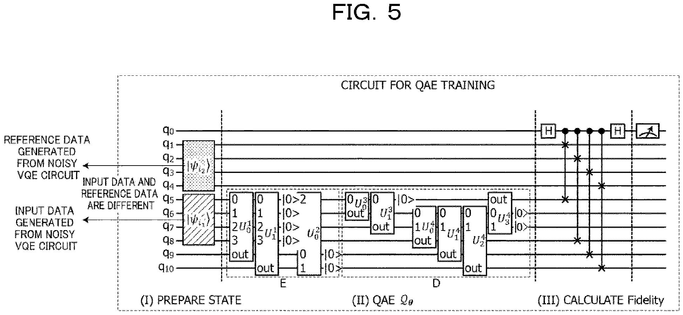

FIG. 5 is a diagram for describing machine learning of the quantum autoencoder that performs noise removal for the VQE. A difference from FIG. 4 is that an input is data for generating a noisy VQE circuit. The noise removal QAE for the VQE illustrated in FIG. 5 compresses and maps an output state (data) from the VQE circuit including noise into a low-dimensional space, and restores the reduced state to an original data space. By maximizing Fidelity between an output of the QAE circuit and another output (reference data) generated from the VQE circuit including noise, it is possible to perform training using a distinction between a noise pattern and an essential information regarding a target ground state and to estimate a ground state more accurately.

For example, the machine learning of the noise removal QAE for the VQE aims to derive a true state "$|\psi\rangle$" from a noisy quantum state "$|\psi_1\rangle$, $|\psi_2\rangle$". Specifically, "$(|\psi_{11}\rangle, |\psi_{12}\rangle),..., (|\psi_{N1}\rangle, |\Psi_{N2}\rangle)$", which is N pieces of pair data, is input to the QAE, and training is performed so as to maximize a training cost indicated in Expression (4).

[Expression 4]

$$\mathcal{L}_A(\boldsymbol{\theta}) = \frac{1}{N} \sum_i \langle \psi_{i_2} | \mathcal{Q}_{\boldsymbol{\theta}}(\psi_{i_1}) | \psi_{i_2} \rangle \qquad \cdots (4)$$

(Points to be Improved)

In the training of the noise removal QAE for the VQE described above, optimization of the cost function using a large number of pieces of training data and a large number of variational parameters is performed. In the process, the parameters are updated many times, and the cost function needs to be calculated many times to calculate an update amount, so that it takes a very long time. Furthermore, it is costly to design the structure of the quantum circuit and initialize the parameters, and it is difficult to obtain high accuracy. Furthermore, since the input and the reference data are noisy, it is difficult to appropriately set a target value as the maximization of the cost function.

For example, when an execution cost of the machine learning of the noise removal QAE for the VQE illustrated in FIG. 5 is described, it is needed to try P patterns of initial values to determine initial values of parameters for the QAE circuit. In each pattern, the number of times of circuit evaluation (execution cost) for training is O (P × N × T) because "the number of pieces of data (N) × the number of times of iteration until convergence (T)" needs the execution cost for determining the initial values for a scale = O (N × T).

Moreover, since there are S patterns of designing the QAE circuit, and the execution cost for determining the parameter initial values in each pattern is "O (P × N × T)", the execution cost needed for designing the circuit is "O (S × P × N × T)". In such training of the QAE, since N is very large (for example, N = 200), the execution costs for designing the QAE circuit and determining the initial values increase.

(Method Proposed in First Embodiment)

Therefore, in an information processing device 10 according to the first embodiment, since training of a noise removal QAE tends to fall into a local solution or a region where it is difficult to search for a solution as a problem size increases, the training is started from avoiding this region in order to overcome this. That is, the information processing device 10 designs a subtask for a main task that the noise removal QAE desires to solve, solves the subtask in advance (curriculum learning), and then determines a circuit design and parameter initialization.

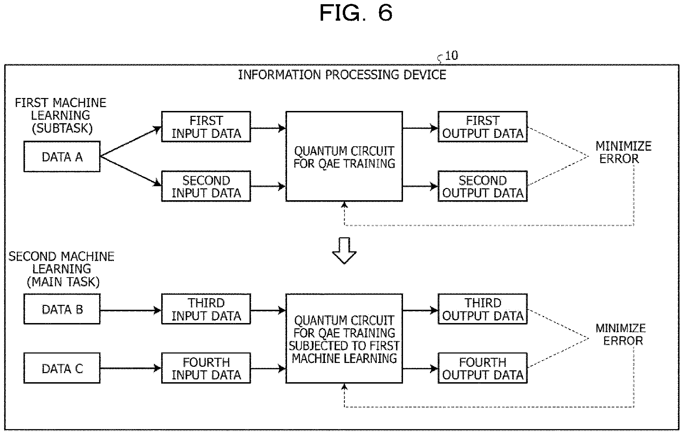

FIG. 6 is a diagram for describing machine learning of a quantum autoencoder according to the information processing device 10 according to the first embodiment. As illustrated in FIG. 6, the information processing device 10 according to the first embodiment executes first machine learning on a noise removal QAE using first input data and second input data in which states of the respective qubits are mutually the same. Then, the information processing device 10 executes second machine learning on the noise removal QAE trained by the first machine learning using third input data and fourth input data in which states of the respective qubits are mutually different.

For example, the information processing device 10 generates the first input data and the second input data from data A generated from a VQE or the like, and inputs the first input data and the second input data to a quantum circuit for machine learning of the noise removal QAE. Then, the information processing device 10 executes the first machine learning (subtask training) in which an error between first output data that is an output result with respect to the first input data and second output data output by the noise removal QAE according to an input of the second input data becomes small.

When the first machine learning is completed, the information processing device 10 generates the third input data from data B generated from the VQE or the like, generates the fourth input data from data C, and inputs the third input data and the fourth input data to the quantum circuit for machine learning of the noise removal QAE. Then, the information processing device 10 executes the second machine learning (main task) in which an error between third output data that is an output result with respect to the third input data and fourth output data output by the noise removal QAE according to an input of the fourth input data becomes small.

As described above, the information processing device 10 may avoid a local solution or a region where it is difficult to search for a solution in the machine learning of noise removal of the variational quantum algorithm, and may reduce quantum resources needed for the machine learning. Therefore, it is possible to generate a highly accurate quantum autoencoder by short-time machine learning.

(Functional Configuration)

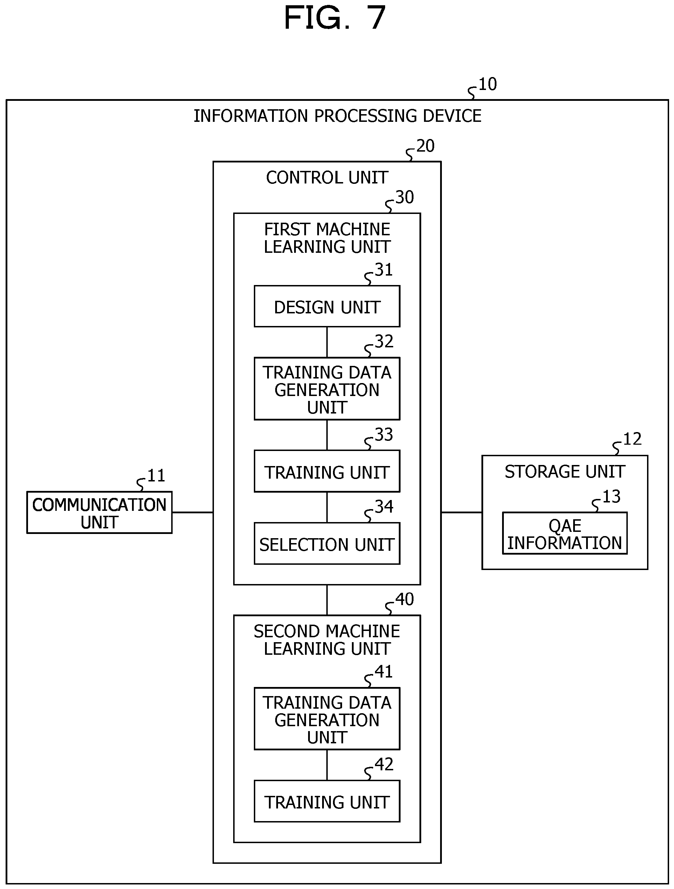

FIG. 7 is a functional block diagram illustrating a functional configuration of the information processing device 10 according to the first embodiment. As illustrated in FIG. 7, the information processing device 10 includes a communication unit 11, a storage unit 12, and a control unit 20.

The communication unit 11 is a processing unit that controls communication with another device, and is, for example, a communication interface or the like. For example, the communication unit 11 receives various types of information and various instructions from an administrator terminal used by an administrator or the like, and transmits a training result or the like to the administrator terminal.

The storage unit 12 is a processing unit that stores various types of data, a program to be executed by the control unit 20, and the like, and is implemented by, for example, a memory, a hard disk, or the like. This storage unit 12 stores QAE information 13.

The QAE information 13 is circuit information or the like for constructing a noise removal QAE, and the noise removal QAE to be subjected to machine learning is constructed using the information stored here. Note that the QAE information may include training data.

The control unit 20 is a processing unit that takes overall control of the information processing device 10, and is implemented by, for example, a processor or the like. The control unit 20 includes a first machine learning unit 30 and a second machine learning unit 40. Here, the first machine learning unit 30 is a processing unit that executes a subtask, and the second machine learning unit 40 is a processing unit that executes a main task.

The first machine learning unit 30 is a processing unit that includes a design unit 31, a training data generation unit 32, a training unit 33, and a selection unit 34, and executes a subtask for a QAE using the first input data and the second input data having the same state of each qubit.

The design unit 31 is a processing unit that designs and generates a plurality of QAEs having different configurations and initial parameters to be subjected to training according to information stored in the QAE information 13. Specifically, the design unit 31 generates the plurality of QAEs (QAE circuit candidates) having different combinations of gates such as CZ and RY and different initial parameters as the QAEs for the subtask.

Then, using each of the plurality of QAE circuit candidates for a subtask, the design unit 31 generates a quantum circuit for machine learning having the first circuit configuration including a gate from which a superposed state is output and a circuit that does not execute a gate operation on input data, and the second circuit configuration (QAE circuit portion) that executes a gate operation on the input data. Note that, here, S QAEs = $\{Q_1,..., Q_S\}$ are generated as the QAE circuit candidates, and each QAE has the first circuit configuration and the second circuit configuration.

The training data generation unit 32 is a processing unit that generates training data used for the subtask (machine learning of the QAE circuit candidates). Specifically, the training data generation unit 32 generates the training data using a plurality of quantum circuits that generates data to be subjected to noise removal, and each of the plurality of quantum circuits uses the VQE. For example, in a case where there are N quantum circuits (a quantum circuit 1 to a quantum circuit N) as the VQE, the training data generation unit 32 uses generated data with noise generated from the quantum circuit 1 as input data to be input to the first quantum circuit configuration and the second quantum circuit configuration (QAE circuit portion to be subjected to training) included in the quantum circuit for machine learning.

In other words, the training data generation unit 32 generates the training data for the subtask using data having the same state of each qubit as two pieces of input data to be input to the quantum circuit for machine learning for each of the S QAEs = $\{Q_1,..., Q_S\}$. For example, M data sets $\{V_1,..., V_M\}$ are generated as a training data set $V_m$.

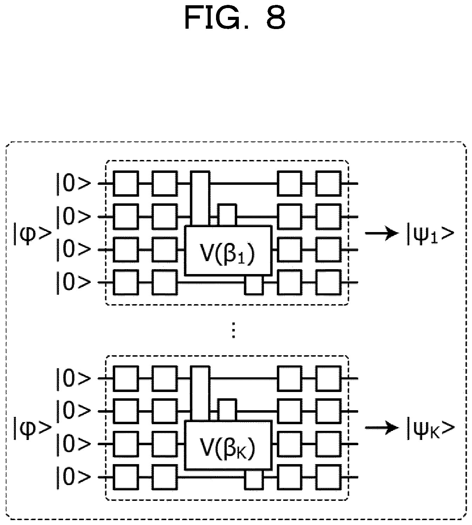

FIG. 8 is a diagram for describing the generation of the training data for the subtask training. As illustrated in FIG. 8, the training data generation unit 32 generates the training data " $|\psi>$" of the subtask from a VQE circuit ($V(\beta)$) which is an example of a parameterized quantum circuit that generates data of the main task. For example, the training data generation unit 32 randomly selects K parameter sets "$\beta_1,..., \beta_k$", and applies each of "$V(\beta_1) ... V(\beta_k)$" to an initial state "$|\Phi>$" (usually $|0>$). As a result, the training data generation unit 32 generates K pieces of training data " $|\psi_1>,..., |\psi_K>$" as the training data for the subtask. That is, "$|\psi_i>$" = $V(\beta_i)|\psi>$" holds.

The training unit 33 is a processing unit that executes machine learning of the plurality of QAE circuit candidates using the training data generated by the training data generation unit 32. Specifically, the training unit 33 executes the subtask for the plurality of QAE circuit candidates.

For example, the training unit 33 acquires output data A1 by inputting input data A to the first circuit configuration of $Q_1$ that is the QAE circuit candidate, and acquires output data A2 reconfigured by the QAE by inputting the same input data A to the second circuit configuration (QAE circuit portion) of $Q_1$ that is the QAE circuit candidate. Then, the training unit 33 executes machine learning of the QAE by executing parameter update or the like of the second circuit configuration (QAE circuit portion) so as to reduce an error between the output data A1 and the output data A2.

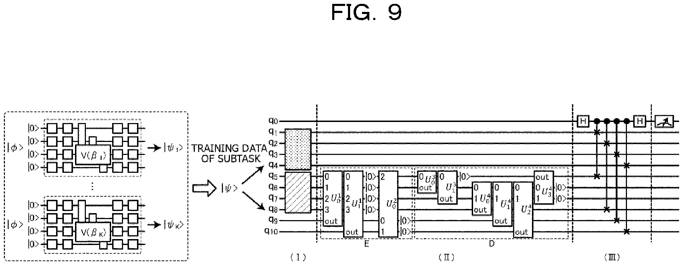

FIG. 9 is a diagram for describing the subtask training of the QAE. As illustrated in FIG. 9, the training unit 33 prepares $\{|\psi_1>,...,|\psi_K>\}$ as the K pieces of data (quantum states), and executes machine learning for the purpose of restoring, from a state $|\psi_i>$, the same state $|\psi_i>$. For example, the training unit 33 adjusts the parameter $\theta$ of the QAE ($Q_\theta$) for maximizing the cost function indicated in Expression (3), and obtains a parameter $\theta_{out}$ corresponding to a maximum value of the cost function.

Describing the example described above, the training unit 33 selects P sets ($\theta_1^{(Qs)}, \theta_2^{(Qs)},... \theta_p^{(Qs)}$) of initial values of the parameter. Then, the training unit 33 initializes $Q_s$ from each known set $\theta_p^{(Qs)}$, and performs training with each training data set $V_m$. Here, an average value of Fidelity between the output $Q_\theta(|\psi>)$ of the QAE and the input data ($|\psi>$) in

the training data set is maximized to a clear target value of 1.

The selection unit 34 is a processing unit that selects one quantum circuit for training based on a result of each first machine learning (subtask) for the plurality of quantum circuits for training. Specifically, the selection unit 34 selects one QAE circuit having the highest prediction accuracy at the time of training or the highest prediction accuracy using verification data after training (highest performance) from among the plurality of QAE circuit candidates designed by the design unit 31 and subjected to training by the training unit 33.

Describing the example described above, the selection unit 34 records a value $f_{spm}$ of a cost function that has been subjected to training and corresponds to $Q_s$, $\theta_p^{(Qs)}$, and $V_m$, and calculates and records an average $f_{sp}$ by a set of data sets by Expression (5). Furthermore, the selection unit 34 calculates and records an average $f_s$ of the cost functions by a set of sets of the initial values of the parameters for $Q_s$ by Expression (6).

[Expression 5]

$$f_{sp} = \frac{1}{M} \sum_m f_{spm} \qquad \cdots (5)$$

[Expression 6]

$$f_s = \frac{1}{P} \sum_p f_{sp} \qquad \cdots (6)$$

Thereafter, the selection unit 34 selects QAE ($Q_{s*}$) corresponding to the highest $f_s$. Then, the selection unit 34 determines a set $\theta_{p*}^{(Qs*)}$ of the initial values corresponding to the highest $f_{s*p}$ as an initial value of the QAE ($Q_{s*}$).

Returning to FIG. 7, the second machine learning unit 40 is a processing unit that includes a training data generation unit 41 and a training unit 42, and executes the main task for a QAE using the third input data and the fourth input data having different states of the respective qubit.

The training data generation unit 41 is a processing unit that generates training data used for the main task (machine learning of the QAE circuit). Specifically, the training data generation unit 41 generates the training data using each of the plurality of quantum circuits using the VQE. For example, in a case where there are the N quantum circuits (the quantum circuit 1 to the quantum circuit N) as the VQE, the training data generation unit 41 generates the training data (data in which states of the respective qubits are different) by combining the generated data with noise generated from each quantum circuit.

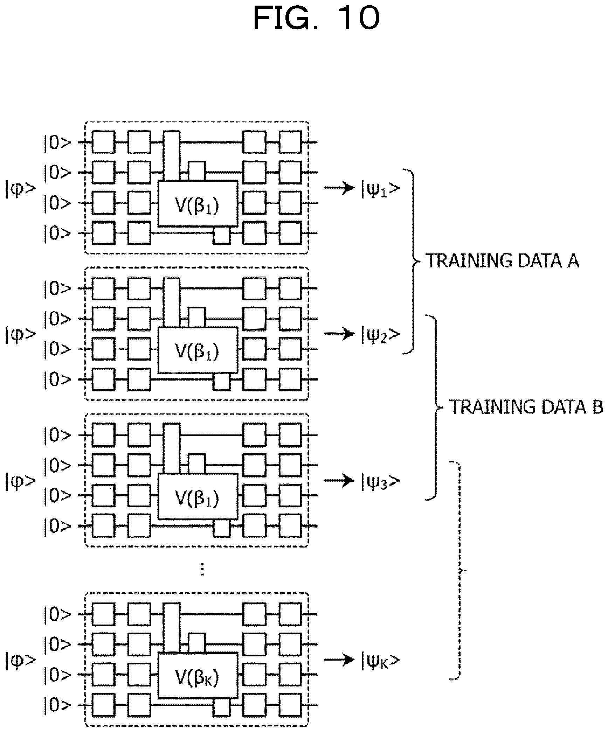

FIG. 10 is a diagram for describing the generation of the training data for the main task training. As illustrated in FIG. 10, the training data generation unit 41 applies the K parameter sets "$\beta_1$,..., $\beta_K$" randomly selected to the VQE circuit (V ($\beta$)) to generate the VQE (V ($\beta_1$) ... V ($\beta_k$)). Subsequently, the training data generation unit 41 inputs data regarding the initial state "$|\Phi>$" to each VQE (V ($\beta_1$) ... V ($\beta_K$)), and acquires the output data $\{|\psi_1>,..., |\psi_K>\}$.

Then, the training data generation unit 41 randomly selects two from the output data $\{|\psi_1>,..., |\psi_K>\}$ output from each VQE to create a set, and sets the set as the training data for the main task. In the example of FIG. 10, the training data generation unit 41 generates training data A $\{|\psi_1>, |\psi_2>\}$, training data B $\{|\psi_2>, |\psi_3>\}$, and the like. Note that, for example, 200 pieces of pair data with noise may be generated using VQEs optimized by different random seeds.

The training unit 42 is a processing unit that executes the second machine learning (main task) on the one quantum circuit for training selected by the selection unit 34 among the plurality of quantum circuits for training. That is, the training unit 42 executes the main task for only one QAE circuit candidate having the best result of the subtask and good performance from among the plurality of QAE circuit candidates designed by the design unit 31.

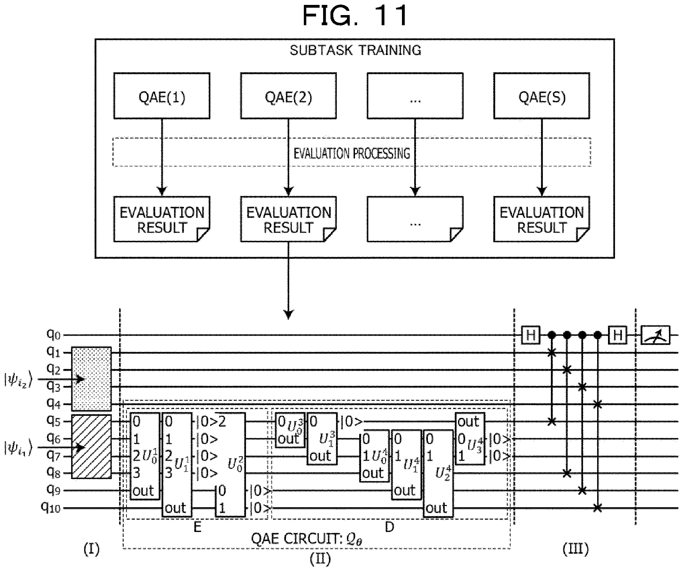

FIG. 11 is a diagram for describing the main task training of the QAE. As illustrated in FIG. 11, the training unit 42 executes machine learning on a "QAE (2)" having the best performance of the subtask among S QAE circuit candidates "QAE (1), QAE (2),..., QAE (S)" using the training data A $\{|\psi_1>, |\psi_2>\}$ and the training data B $\{|\psi_2>, |\psi_3>\}$ generated by the training data generation unit 41.

For example, the training unit 42 acquires output data A3 by inputting "$|\psi_1>$" of the training data A to the first circuit configuration of the QAE (2), and acquires output data A4 reconfigured by the QAE by inputting "$|\psi_2>$" of the training data A to the second circuit configuration (QAE circuit portion) of the QAE(2). Then, the training unit 42 executes machine learning of the QAE by executing parameter update or the like of the second circuit configuration (QAE circuit portion) so as to reduce an error between the output data A3 and the output data A4.

That is, the training unit 42 inputs the training data including noise (training data A $\{|\psi_1>, |\psi_2>\}$, training data B $\{|\psi_2>, |\psi_3>\}$, and the like) to the QAE (Qe) subjected to training by the subtask, and performs training to maximize the cost function indicated in Expression (4). Then, the training unit 42 adjusts the parameter $\theta$ of the QAE ($Q_\theta$) for maximizing the

cost function, and obtains the parameter $\theta_{out}$ corresponding to a maximum value of the cost function.

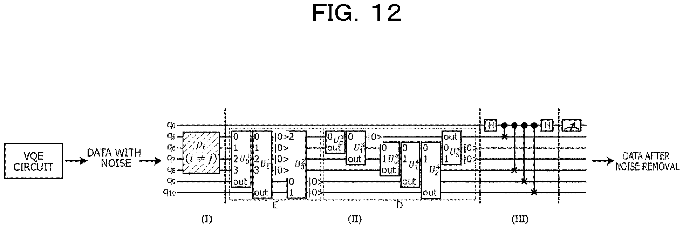

The QAE for executing noise removal is generated by the two-stage machine learning described above. Such a QAE is used for, for example, noise removal of the output data of the VQE. FIG. 12 is a diagram for describing noise removal using the QAE after training. As illustrated in FIG. 12, when data with noise generated by the VQE is input to the QAE after training, the noise is separated by compression by an encoder to generate compressed information without noise, and the compressed information is converted into a target state (data without noise) by a decoder to be output. Such noise removal may be executed by the information processing device that has executed machine learning (for example, the control unit 20), or may be executed by another device.

(Flow of Processing)

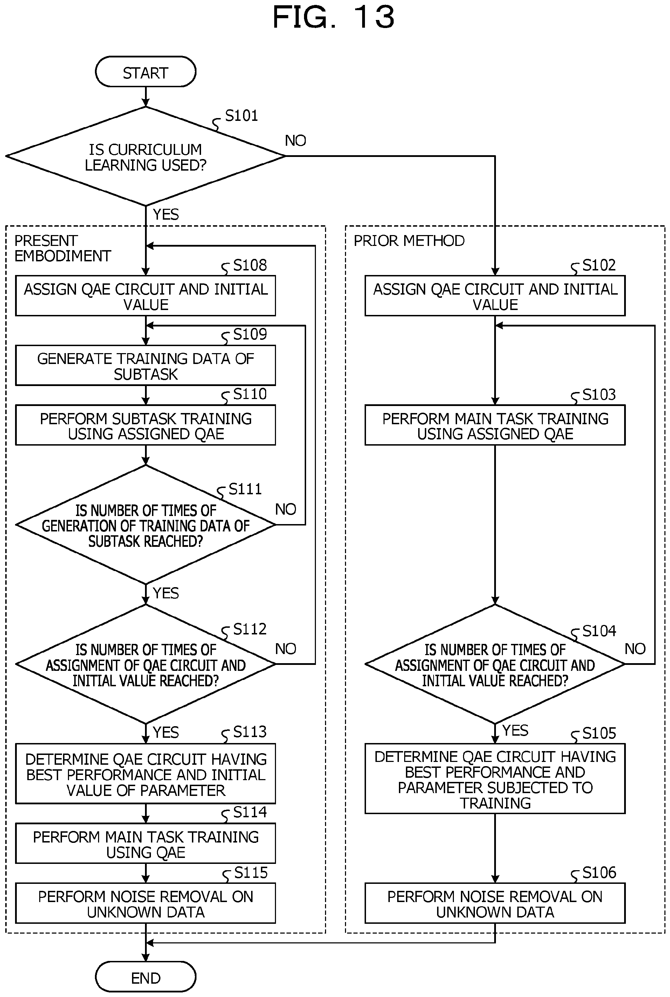

FIG. 13 is a flowchart illustrating a flow of training processing of the QAE. As illustrated in FIG. 13, in a case where setting does not use the curriculum learning (S101: No), the information processing device 10 executes QAE training by a prior method.

Specifically, the information processing device 10 assigns a QAE circuit and an initial value (S102), and executes main task training using the assigned QAE (S103). Then, the information processing device 10 repeats S103 and subsequent steps until the number of times of assignment of the QAE circuit and the initial value is reached (S104: No). On the other hand, in a case where the number of times of assignment of the QAE circuit and the initial value is reached (S104: Yes), the information processing device 10 determines the QAE circuit having the best performance and a parameter subjected to training (S105). After completion of the training, the information processing device 10 executes noise removal on unknown data (S106).

On the other hand, in a case where the setting uses the curriculum learning (S101: Yes), the information processing device 10 executes two-stage QAE training.

Specifically, the information processing device 10 assigns a QAE circuit and an initial value (S108), generates training data of a subtask (S109), and executes subtask training using the assigned QAE (S110).

Then, the information processing device 10 repeats S109 and subsequent steps until the number of times of generation of the training data of the subtask is reached (S111: No), and when the number of times of generation of the training data of the subtask is reached (S111: Yes), the information processing device 10 determines whether or not the number of times of assignment of the QAE circuit and the initial value is reached (S112).

Here, the information processing device 10 repeats S108 and subsequent steps in a case where the number of times of assignment of the QAE circuit and the initial value is not reached (S112: No). On the other hand, in a case where the number of times of assignment of the QAE circuit and the initial value is reached (S112: Yes), the information processing device 10 determines the QAE circuit having the best performance and an initial value of a parameter (S113), and performs main task training using the determined QAE (S114). After completion of the training, the information processing device 10 executes noise removal on unknown data (S115).

(Effects)

As described above, the information processing device 10 designs a subtask from a main task for the purpose of noise removal of a variational quantum algorithm, and determines a structure of an Ansatz quantum circuit of a quantum autoencoder and an initial value of a circuit parameter from a training result of the subtask. Then, the information processing device 10 uses a small training data set of the subtask as an output of a variational circuit (VQE circuit or the like) that generates data in the main task. As a result, the information processing device 10 may avoid a local solution or a region where it is difficult to search for a solution in training of the noise removal of the variational quantum algorithm, and may reduce quantum resources needed for the training.

Furthermore, the information processing device 10 may design a subtask for a main task that a noise removal QAE desires to solve, solve the subtask in advance, and then determine a circuit design and parameter initialization. As a result, since it is possible to reduce an execution cost for the circuit design and reduce an execution cost for the parameter initialization, the information processing device 10 may generate a highly accurate noise removal QAE in a short time.

For example, when an execution cost for a subtask using K pieces of training data $\{|\psi_1>,...,|\psi_K>\}$ is described, the information processing device 10 needs to try P patterns of initial values to determine initial values of parameters for a QAE circuit. In each pattern, the number of times of circuit evaluation (execution cost) for training is O $(P \times K \times T)$ because the number of times of iteration until convergence (T) of the number of pieces of data (K) needs the execution cost for determining the initial values for a scale = O $(K \times T)$.

Moreover, since there are S patterns of designing the QAE circuit, and the execution cost for determining the parameter initial values in each pattern is "O $(K \times T)$", the execution cost needed for designing the circuit is "O $(S \times P \times K \times T)$". Since K is small (for example, K = 2) in the subtask, the execution costs for designing the QAE circuit and setting the initial values are very small compared to those in the main task.

Furthermore, since the circuit design of the QAE and the initial values of the parameters obtained by the subtask training are determined, the execution costs for determining the circuit design of the QAE and the initial values of the parameters in the main task are the same as those of the subtask.

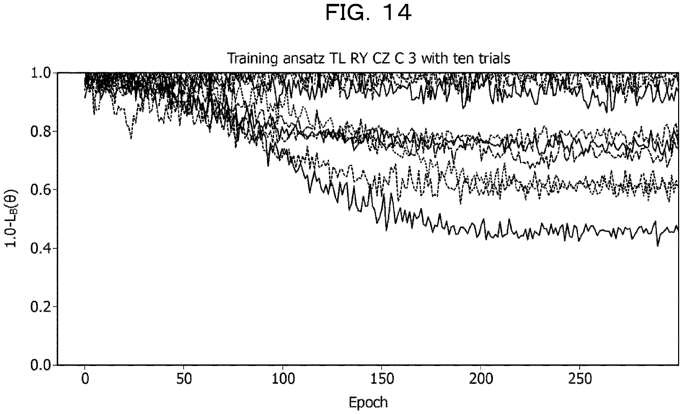

FIG. 14 is a diagram for describing an effect of the subtask training. In FIG. 14, a result of maximizing the cost function of Expression (3) to a target value of 1 for the purpose of restoring, from the state $|\psi_i>$, the same state $|\psi_i>$ using the K (= two) pieces of training data $\{|\psi_1>,..., |\psi_K>\}$ for ten QAE candidates is illustrated. Furthermore, in FIG. 14, a horizontal axis represents the number of epochs, and a vertical axis represents "1.0 - value of cost function". As illustrated in FIG. 14, in a case where training is performed with data generated from the VQE circuit of the main task, as the number of epochs increases, the value of the cost function increases and the value of " 1.0 - value of cost function" decreases. As described above, accuracy of the QAE may be improved by the subtask training.

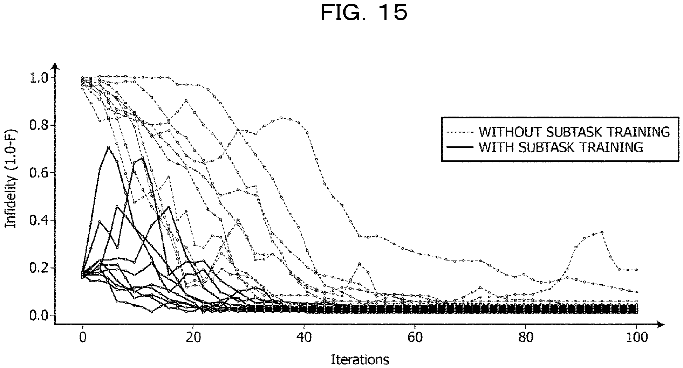

FIG. 15 is a diagram for describing training with a stepwise effect. In FIG. 15, a comparison between the prior method of performing training only by the main task (without the curriculum learning) and the method of the first embodiment in which the main task training is performed after the subtask training (curriculum learning) is illustrated. Note that, in FIG. 15, a horizontal axis represents the number of times of iteration, and a vertical axis represents infidelity with a target value (target state), and training results for ten QAEs in each of the prior method and the method according to the first embodiment are illustrated. As illustrated in FIG. 15, the first embodiment in which the curriculum learning was performed using data generated from the VQE of the main task converged earlier than the prior method. Therefore, a training time was able to be shortened as compared with the prior method.

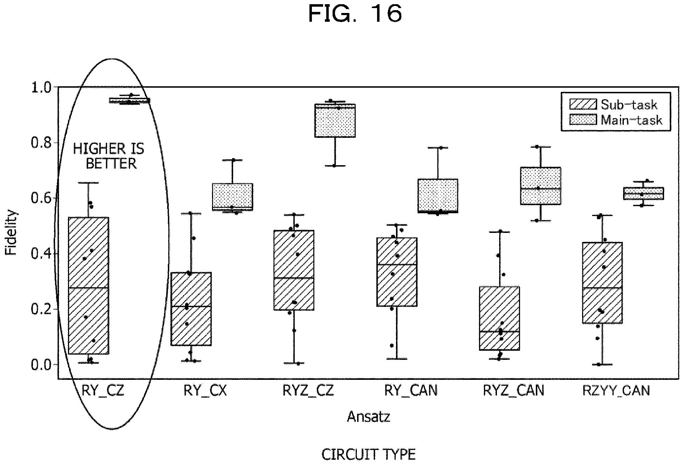

FIG. 16 is a diagram for describing determination of the QAE circuit. A training cost of the subtask and a training cost of the main task without the curriculum learning are illustrated. The higher the training cost, the closer a vertical axis is to "1.0", so that high accuracy is obtained. As illustrated in FIG. 16, when the training cost of the subtask is high, the training cost of the main task also tends to be high. Therefore, it is preferable to determine a circuit that has reached the high training cost of the subtask as the circuit of the main task. In the example of FIG. 16, "RY_CZ" executed in the subtask training is set as a target of the main task training, so that the accuracy is most improved.

[Second Embodiment]

Meanwhile, although the embodiment of the present disclosure has been described above, the present disclosure may be implemented in various different modes in addition to the embodiment described above.

(Numerical Values and the like)

Numerical values, training data, graphs, and the like used in the embodiment described above are merely examples, and may be optionally changed. Furthermore, the flow of the processing described in each flowchart may be appropriately changed unless otherwise contradicted.

(System)

Pieces of information including a processing procedure, a control procedure, a specific name, various types of data, and parameters described above or illustrated in the drawings may be optionally changed unless otherwise specified.

Furthermore, specific forms of distribution and integration of components of each device are not limited to the forms illustrated in the drawings. For example, the first machine learning unit 30 and the second machine learning unit 40 may be integrated. That is, all or a part of the components may be functionally or physically distributed or integrated in optional units, according to various types of loads, use situations, or the like. Moreover, all or an optional part of the respective processing functions of each device may be implemented by a central processing unit (CPU) and a program analyzed and executed by the CPU, or may be implemented as hardware by wired logic.

Moreover, all or an optional part of the respective processing functions performed in each device may be implemented by a CPU and a program analyzed and executed by the CPU, or may be implemented as hardware by wired logic.

(Hardware)

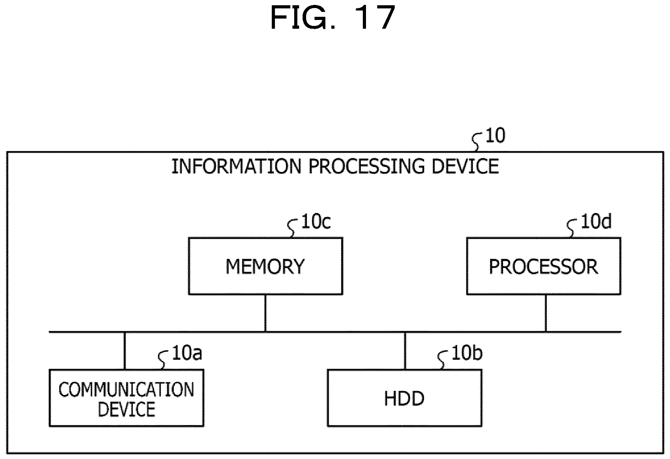

FIG. 17 is a diagram for describing a hardware configuration example. Here, as an example, the information processing device 10 will be described. As illustrated in FIG. 17, the information processing device 10 includes a communication device 10a, a hard disk drive (HDD) 10b, a memory 10c, and a processor 10d. Furthermore, the respective units illustrated in FIG. 17 are mutually coupled by a bus or the like.

The communication device 10a is a network interface card or the like, and communicates with another device.

The HDD 10b stores a program for operating the functions illustrated in FIG. 7, and a database (DB).

The processor 10d reads, from the HDD 10b or the like, a program that executes processing similar to that of each processing unit illustrated in FIG. 7, and loads it in the memory 10c, thereby operating a process for executing each function described with reference to FIG. 7 or the like. For example, this process executes a function similar to that of each processing unit of the information processing device 10. Specifically, the processor 10d reads, from the HDD 10b or the like, a program having a function similar to that of the first machine learning unit 30, the second machine learning unit 40, or the like. Then, the processor 10d executes a process for executing processing similar to that of the first machine learning unit 30, the second machine learning unit 40, or the like.

As described above, the information processing device 10 operates as an information processing device that executes a machine learning method by reading and executing a program. Furthermore, the information processing device 10 may also implement functions similar to the functions of the embodiment described above by reading the program described above from a recording medium by a medium reading device and executing the read program described above. Note that the program referred to in other embodiments is not limited to being executed by the information processing device 10. For example, the embodiment described above may be similarly applied to a case where another computer or server executes the program or a case where these computer and server cooperatively execute the program.

This program may be distributed via a network such as the Internet. Furthermore, this program may be recorded in a computer-readable recording medium such as a hard disk, a flexible disk (FD), a compact disc read only memory (CD-ROM), a magneto-optical disk (MO), or a digital versatile disc (DVD), and may be executed by being read from the recording medium by a computer.

**Claims**

1. A machine learning program comprising instructions which, when executed by a computer, cause the computer to execute processing comprising:

   executing first machine learning on a quantum autoencoder by using first input data and second input data in which states of the respective qubits are mutually the same; and
   executing second machine learning on the quantum autoencoder trained by the first machine learning by using third input data and fourth input data in which states of the respective qubits are mutually different.

2. The machine learning program according to claim 1, wherein,
   the executing of the first machine learning includes:

   inputting the first and second input data to a quantum circuit for training, the quantum circuit including a quantum circuit portion that does not perform a gate operation on an input qubit and the quantum autoencoder that executes encoding and decoding on an input qubit, the first input data being input to the quantum circuit portion to acquire first output data from the quantum circuit portion, the second input data being input to the quantum autoencoder to acquire reconfigured second output data from the quantum autoencoder, and
   executing the first machine learning so that an error between the first output data and the second output data is reduced.

3. The machine learning program according to claim 2, wherein,
   the executing of the second machine learning includes:

   inputting the third and fourth input data to the quantum circuit for training, the third input data being input to the quantum circuit portion to acquire third output data, the fourth input data being input to the quantum autoencoder trained by the first machine learning to acquire reconfigured fourth output data, and
   executing the second machine learning so that an error between the third output data and the fourth output data is reduced.

4. The machine learning program according to claim 1, wherein

   the quantum autoencoder includes a quantum circuit used, after the second machine learning, for noise removal of generated data generated by a quantum circuit that uses a variational quantum eigensolver (VQE),
   the executing of the first machine learning includes:

executing the first machine learning on each piece of generated data generated by each of a plurality of the quantum circuits that uses the VQE by using the first input data and the second input data, and the executing of the second machine learning includes:

generating a set of the third input data and the fourth input data by combining each piece of the generated data generated by each of the plurality of quantum circuits that uses the VQE, and executing the second machine learning by using the generated set of input data.

5. The machine learning program according to claim 3, wherein

the quantum circuit for training includes a plurality of quantum circuits for training that includes the quantum circuit and the respective quantum autoencoders that have different gate operations or initial parameters, the executing of the first machine learning includes:

executing the first machine learning on each of the plurality of quantum circuits for training, and selecting, based on a result of each first machine learning for the plurality of quantum circuits for training, one quantum circuit for training from among the plurality of quantum circuits for training, and the executing of the second machine learning includes: executing the second machine learning on the selected one quantum circuit for training.

6. A machine learning method implemented by a computer, the machine learning method comprising:

the computer executing first machine learning on a quantum autoencoder by using first input data and second input data in which states of the respective qubits are mutually the same; and the computer executing second machine learning on the quantum autoencoder trained by the first machine learning by using third input data and fourth input data in which states of the respective qubits are mutually different.

7. An information processing apparatus comprising a control unit configured to execute processing comprising:

executing first machine learning on a quantum autoencoder by using first input data and second input data in which states of the respective qubits are mutually the same; and executing second machine learning on the quantum autoencoder trained by the first machine learning by using third input data and fourth input data in which states of the respective qubits are mutually different.

# FIG. 1

FIG. 2A

$\theta_t$

QUANTUM SIDE
(1) (2)
ACQUIRE CLASSICAL VALUE BY
QUANTUM MEASUREMENT

(3)

CLASSICAL SIDE
(4)
OPTIMIZE
UPDATE PARAMETERS

VARIATIONAL
QUANTUM
CIRCUIT

REPEAT

EFFICIENCY IMPROVEMENT BY
CLASSICAL/QUANTUM HYBRID

(5)

FIG. 2B

$\theta_t$

QUANTUM SIDE
(1) (2)
CALCULATION OF
EXPECTATION VALUE

(3)

CLASSICAL SIDE
(4)
OPTIMIZE
UPDATE PARAMETERS

VARIATIONAL
QUANTUM
CIRCUIT

ITERATE

EFFICIENCY IMPROVEMENT BY
CLASSICAL/QUANTUM HYBRID

(5)

## FIG. 3A

## FIG. 3B

# FIG. 4

# FIG. 5

# FIG. 6

# FIG. 7

```
                                              ⌐10
┌────────────────────────────────────────────────────┐
│              INFORMATION PROCESSING DEVICE           │
│                              ⌐20                      │
│         ┌──────────────────────────────┐             │
│         │         CONTROL UNIT          │             │
│         │                    ⌐30        │             │
│         │  ┌────────────────────────┐   │             │
│         │  │   FIRST MACHINE        │   │             │
│         │  │   LEARNING UNIT        │   │             │
│         │  │              ⌐31       │   │             │
│         │  │  ┌──────────────────┐  │   │             │
│         │  │  │   DESIGN UNIT    │  │   │             │
│         │  │  └──────────────────┘  │   │             │
│         │  │              ⌐32       │   │             │
│         │  │  ┌──────────────────┐  │   │             │
│         │  │  │  TRAINING DATA   │  │   │      ⌐12    │
│         │  │  │  GENERATION      │  │   │  ┌────────────────┐
│         │  │  │  UNIT            │  │   │  │ STORAGE UNIT   │
│         │  │  └──────────────────┘  │   │  │          ⌐13  │
│         │  │              ⌐33       │   │  │  ┌──────────┐ │
│    ⌐11  │  │  ┌──────────────────┐  │   │  │  │   QAE    │ │
│ ┌──────────┐│  │  TRAINING UNIT   │  │   │  │  │INFORMATION│ │
│ │COMMUNI-  ││  └──────────────────┘  │   │  │  └──────────┘ │
│ │CATION    ││              ⌐34       │   │  └────────────────┘
│ │UNIT      ││  ┌──────────────────┐  │   │             │
│ └──────────┘│  │  SELECTION UNIT  │  │   │             │
│         │  │  └──────────────────┘  │   │             │
│         │  └────────────────────────┘   │             │
│         │                    ⌐40        │             │
│         │  ┌────────────────────────┐   │             │
│         │  │   SECOND MACHINE       │   │             │
│         │  │   LEARNING UNIT        │   │             │
│         │  │              ⌐41       │   │             │
│         │  │  ┌──────────────────┐  │   │             │
│         │  │  │  TRAINING DATA   │  │   │             │
│         │  │  │  GENERATION UNIT │  │   │             │
│         │  │  └──────────────────┘  │   │             │
│         │  │              ⌐42       │   │             │
│         │  │  ┌──────────────────┐  │   │             │
│         │  │  │  TRAINING UNIT   │  │   │             │
│         │  │  └──────────────────┘  │   │             │
│         │  └────────────────────────┘   │             │
│         └──────────────────────────────┘             │
└────────────────────────────────────────────────────┘
```

# FIG. 8

# FIG. 9

# FIG. 10

# FIG. 11

# FIG. 12

# FIG. 13

START

S101

IS CURRICULUM LEARNING USED? — NO

YES

**PRESENT EMBODIMENT**

S108
ASSIGN QAE CIRCUIT AND INITIAL VALUE

S109
GENERATE TRAINING DATA OF SUBTASK

S110
PERFORM SUBTASK TRAINING USING ASSIGNED QAE

S111
IS NUMBER OF TIMES OF GENERATION OF TRAINING DATA OF SUBTASK REACHED? — NO

YES

S112
IS NUMBER OF TIMES OF ASSIGNMENT OF QAE CIRCUIT AND INITIAL VALUE REACHED? — NO

YES

S113
DETERMINE QAE CIRCUIT HAVING BEST PERFORMANCE AND INITIAL VALUE OF PARAMETER

S114
PERFORM MAIN TASK TRAINING USING QAE

S115
PERFORM NOISE REMOVAL ON UNKNOWN DATA

**PRIOR METHOD**

S102
ASSIGN QAE CIRCUIT AND INITIAL VALUE

S103
PERFORM MAIN TASK TRAINING USING ASSIGNED QAE

S104
IS NUMBER OF TIMES OF ASSIGNMENT OF QAE CIRCUIT AND INITIAL VALUE REACHED? — NO

YES

S105
DETERMINE QAE CIRCUIT HAVING BEST PERFORMANCE AND PARAMETER SUBJECTED TO TRAINING

S106
PERFORM NOISE REMOVAL ON UNKNOWN DATA

END

## FIG. 14

Training ansatz TL RY CZ C 3 with ten trials

FIG. 15

# FIG. 16

# FIG. 17

Europäisches
Patentamt

European
Patent Office

Office européen
des brevets

# EUROPEAN SEARCH REPORT

**Application Number**

EP 25 15 8779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUOC HOAN TRAN ET AL: "Variational Denoising for Variational Quantum Eigensolver", ARXIV.ORG, CORNELL UNIVERSITY LIBRARY, 201 OLIN LIBRARY CORNELL UNIVERSITY ITHACA, NY 14853, 9 November 2023 (2023-11-09), XP091655605, * abstract; figures 1-5, S1, S6 * * page 1, column 2, line 35 - page 4, column 2, line 16 * * page 7, line 18 - page 10, line 36 * | 1-7 | INV. G06N3/0455 G06N3/088 G06N10/60 |
| A | DMYTRO BONDARENKO ET AL: "Quantum autoencoders to denoise quantum data", ARXIV.ORG, CORNELL UNIVERSITY LIBRARY, 201 OLIN LIBRARY CORNELL UNIVERSITY ITHACA, NY 14853, 21 October 2019 (2019-10-21), XP081518268, * abstract; figures 1-4 * * page 2, column 1, line 26 - page 5, column 1, line 18 * | 1-7 | |
| A | DAVID F LOCHER ET AL: "Quantum Error Correction with Quantum Autoencoders", ARXIV.ORG, CORNELL UNIVERSITY LIBRARY, 201 OLIN LIBRARY CORNELL UNIVERSITY ITHACA, NY 14853, 6 March 2023 (2023-03-06), XP091452853, * abstract; figures 1, 2 * * page 4, column 1, line 5 - page 8, column 1, line 2 * * page 10, column 1, line 1 - page 12, column 1, line 22 * * page 20, line 25 - page 23, line 17 * | 1-7 | **TECHNICAL FIELDS SEARCHED (IPC)** G06N |

The present search report has been drawn up for all claims

| Place of search | Date of completion of the search | Examiner |
|---|---|---|
| The Hague | 11 July 2025 | Rousset, Antoine |

EPO FORM 1503 03.82 (P04C01)

**REFERENCES CITED IN THE DESCRIPTION**

**Patent documents cited in the description**

- JP 2022176899 A
- JP 2021193615 A
- US 20200169396
- US 20190164034